# DEMANDE DE BREVET EUROPEEN

(11) **EP 0 837 571 A1**
(43) Date de publication de la demande: **22.04.1998**
(21) Numéro de dépôt: 97402476.2
(22) Date de dépôt: 20.10.1997
(51) Int. Cl.: H04B 10/18

(54) **Signal optique pour un système de transmission optique a solitons**

(30) Priorité: 21.10.1996 FR 9612746
(71) Demandeur: ALCATEL ALSTHOM COMPAGNIE GENERALE D'ELECTRICITE, 75008 Paris (FR)
(72) Inventeur: Desurvire, Emmanuel, 91680 Bruyeres le Chatel (FR); Leclerc, Olivier, 91240 St Miche-sur-Orge (FR)
(74) Mandataire: Lamoureux, Bernard

(57) **Abrégé**

L'invention propose, dans un système de transmission à solitons, d'envoyer un signal constitué d'une série périodique de solitons présentant chacun une largeur comprise entre 0,20 et 0,33 fois la période du signal. Dans un tel signal, l'interaction entre les solitons permet de compenser la gigue provoquée par l'effet Gordon-Haus.

On obtient ainsi un signal pouvant servir d'horloge, avec un facteur de qualité en amplitude Qa ou temporel Qt élevé, pour des distances z importantes.

## Description

La présente invention a pour objet un signal optique pour un système de transmission optique a solitons, ainsi qu'une horloge optique formée d'un tel signal. Elle concerne aussi un procédé de génération d'un signal d'horloge optique dans un système optique de transmission d'information, et un système de transmission optique comprenant un tel signal d'horloge.

La transmission d'impulsions solitons ou solitons dans la partie d'une fibre optique à dispersion anormale est un phénomène connu. La transmission de solitons dits "noirs", constitués par des trous impulsionnels dans un signal continu, dans la partie à dispersion normale d'une fibre optique est aussi connue; dans ce cas, les solitons présentant une longueur d'onde telle qu'ils se propagent avec une dispersion chromatique négative. Dans le cas des solitons "blancs" comme dans celui des solitons "noirs", on utilise pour compenser la dispersion du signal optique la non-linéarité dans la partie correspondante de la fibre. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, comme décrit par exemple dans l'article de J. P. Gordon et H. A. Haus, Optical Letters, vol. 11 n° 10 pages 665-667. Cet effet, appelé effet Gordon-Haus, impose une limite théorique à la qualité ou au débit des transmissions par solitons.

Du fait des déformations induites sur les solitons par la transmission, et notamment de la gigue induite par l'effet Gordon-Haus, des efforts , considérables sont nécessaires pour assurer la transmission du signal codé par des solitons, et pour permettre la récupération nécessaire de la fréquence d'horloge à partir de signaux pseudo-aléatoires. On a ainsi proposé des systèmes de filtres guidants glissants, permettant de contrôler la gigue des solitons transmis, et divers systèmes de récupération d'horloge, opto-électroniques ou optiques. Ces systèmes sont relativement lourds et complexes, du fait notamment de la nécessité d'éliminer les effets de la gigue avant de récupérer l'horloge. Un tel exemple de système de récupération d'horloge est décrit dans FR-A-2 706 710.

Des solitons voisins interagissent, comme décrit par F. M. Mitschke et L. F. Mollenauer, Optical Letters, vol. 12 n° 5 pages 355-357. Cette interaction se traduit par une attraction entre des solitons voisins, en l'absence de modulation, i. e. pour des solitons en phase. Elle se traduit par une répulsion entre des solitons voisins en opposition de phase.

Cette interaction est considérée très généralement comme un phénomène gênant, car conduisant à une déformation des solitons transmis pouvant entraîner des pertes d'information; voir par exemple N. J. Smith et al Optical Letters vol. 19 n° 1, pages 16-18, qui présente cette interaction comme "une des contraintes majeures dans la conception de systèmes de communication à fibres optiques par solitons. On propose dans l'art antérieur de s'affranchir de cette interaction en imposant une contrainte sur la "distance" temporelle entre deux solitons transmis, de sorte à limiter les effets de l'interaction entre solitons. Une valeur couramment admise pour la séparation minimale entre deux solitons est de 0,2 x Dt, où Dt est la largeur des solitons, classiquement pour une énergie égale à la moitié de l'énergie maximale (FWHM).

La présente invention propose une solution originale et simple au problème de la transmission d'une horloge dans un système de transmission par solitons. L'invention permet de simplifier la transmission d'une horloge dans le système de transmission, en s'affranchissant notamment de la gigue provoqué par l'effet Gordon-Haus.

Plus précisément, l'invention propose un signal optique, constitué d'une série périodique de solitons présentant chacun une largeur temporelle comprise entre 0,20 et 0,33 fois la période du signal.

Dans un mode de réalisation, les solitons sont des solitons noirs.

Des solitons voisins peuvent être en phase, ou en opposition de phase. On considère dans ce dernier cas pour la période l'enveloppe en puissance, indépendamment des changements de signe du champ.

L'invention a aussi pour objet une horloge optique formée d'un tel signal optique.

Elle a aussi pour objet un système optique de transmission d'information, comprenant un tel signal optique ou une telle horloge optique.

Enfin, l'invention propose un procédé de génération d'un signal d'horloge optique dans un système optique de transmission d'information, comprenant l'émission d'une série périodique de solitons présentant chacun une largeur temporelle comprise entre 0,20 et 0,33 fois la période du signal.

Dans un mode de mise en oeuvre, les solitons sont des solitons noirs.

Le procédé peut en outre comprendre la modulation (0-p) des solitons émis.

Dans un mode de mise en oeuvre du procédé, les solitons sont émis dans la bande d'information utile du système optique de transmission d'information.

Il est aussi possible que les solitons soient émis en dehors de la bande d'information utile du système optique de transmission d'information.

D'autres caractéristiques et avantages de l'invention apparaîtront à la lecture de la description qui suit de modes de réalisation de l'invention, donnés à titre d'exemple et en référence aux dessins annexés qui montrent:
- les figures 1A, 1B, 1C, 1D : des exemples de signaux sur divers canaux d'un système de transmission à solitons utilisant l'invention;
- figure 2 une représentation graphique du facteur de qualité Q en fonction de la distance z, pour un signal selon l'invention;
- figure 3, l'allure du diagramme de l'oeil dans le cas du signal de la figure 2, pour une distance de propagation de 10 Mm.

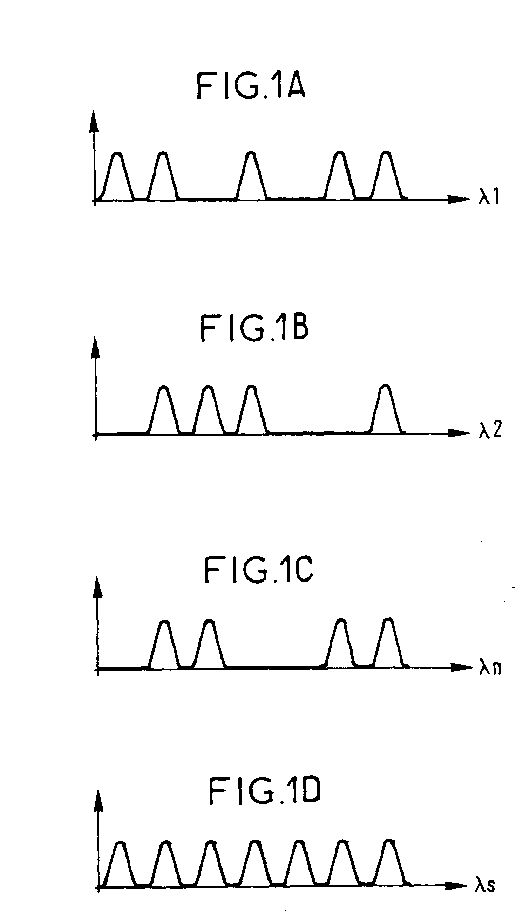

Les figures 1A, 1B, 1C, 1D montrent des exemples de signaux sur divers canaux d'un système de transmission à solitons utilisant l'invention. Typiquement, un tel système de transmission à solitons comprend des moyens d'émission, reliée à une fibre optique, sur laquelle sont disposés à intervalles réguliers des amplificateurs et/ou des filtres.

Comme cela est connu en soi, la bande utile d'une fibre optique pour une transmission par solitons, est découpée en divers canaux pour la transmissions de différents signaux λ₁ à λₙ, chacun constitués de solitons correspondant à des bits à la valeur logique un et de blancs correspondants à la valeur logique zéro. Les figures 1A, 1B, 1C montrent l'allure de ces signaux pour trois longueurs d'onde λ₁, λ₂, λₙ respectivement, avec en ordonnées l'amplitude et en abscisse le temps.

L'invention propose de transmettre outre ces différents signaux un signal λₛ tel que montré sur la figure 1D, constitué d'une suite ininterrompue de solitons émis à une fréquence d'horloge à transmettre dans le système ou au débit du système de transmission, et présentant une largeur telle que l'interaction entre les solitons compense la gigue induite par l'effet Gordon-Haus. Du fait de la transmission d'une suite ininterrompue de solitons, chaque soliton ayant tendance à se déformer est repoussé par l'interaction des solitons voisins, ce qui va à l'encontre de la déformation du signal.

On peut émettre une série de solitons en phase, en exploitant l'interaction attractive entre les solitons voisins; alternativement, on peut émettre une série de solitons en opposition de phase, avec une modulation (0-p), en exploitant l'interaction répulsive entre des solitons voisins.

L'invention vainc ainsi le préjudice de l'état de la technique quant à l'effet négatif de l'interaction entre les solitons. Elle propose à l'encontre de l'enseignement de l'état de la technique d'exploiter l'interaction entre les solitons pour surmonter les déformations du signal dans la fibre, et notamment pour corriger la gigue induite par l'effet Gordon-Haus.

En considérant la définition classique de "largeur" (FWHM) d'une impulsion soliton, l'invention propose que la largeur de chaque soliton soit comprise entre 0,20 et 0,33 fois la période des solitons dans le signal. Le mot période est utilisé ici pour l'enveloppe en puissance, indépendamment des changements de signe éventuels du champ pouvant être utilisés dans le cas de solitons en opposition de phase. La borne inférieure de cette plage préférée permet d'assurer que les solitons du signal interagissent suffisamment pour compenser la gigue due à l'effet Gordon-Haus, et ne se comportent pas en solitons isolés comme dans les systèmes de transmission connus. La borne supérieure de cette plage permet d'assurer que les signaux transmis conservent le caractère de solitons, malgré l'interaction entre les solitons voisins, et permet de conserver la stabilité du signal en propagation non linéaire.

Le signal de l'invention se comporte comme une suite de solitons, et traverse donc tous les éléments passifs qui peuvent être disposés sur une fibre, tels que des filtres guidants et autres.

La transmission du signal de l'invention peut être utilisée pour différentes applications. On peut citer à titre d'exemple :
- contrôle en ligne de modulateur synchrone pour la régénération de solitons;
- synchronisation en ligne de composants actifs, comme un convertisseur de longueur d'onde;
- contrôle en ligne du démultiplexage;
- transport de signal d'horloge.

L'utilisation du signal de l'invention permet la distribution d'une horloge dans un système de transmission par solitons, ou la simple transmission d'une horloge d'un point à l'autre du système.

Elle présente les avantages suivants par rapport aux dispositifs et procédés connus de l'art antérieur. D'une part, l'horloge formée par le signal de l'invention présente une pureté spectrale plus grande ou un bruit de phase radiofréquence plus faible que les horloges obtenues de façon classique à partir de trains pseudo-aléatoires. Pour des débits de l'ordre de 1 à 10 Gbit/s, le signal selon l'invention constitue une horloge présentant un spectre d'une largeur de quelques centaines de herz. A titre de comparaison, une horloge dérivée de façon classique à partir de trains pseudo-aléatoires présente typiquement un spectre de largeur supérieure au MHz. D'autre part, le signal de l'invention permet une utilisation directe de l'horloge optique, sans transformation ni traitement préalable. Cette utilisation directe de l'horloge permet d'envisager de très hauts débits, comme 100 Gbit/s, pour lesquels les procédés classiques de récupération d'horloge présentent de grandes difficultés.

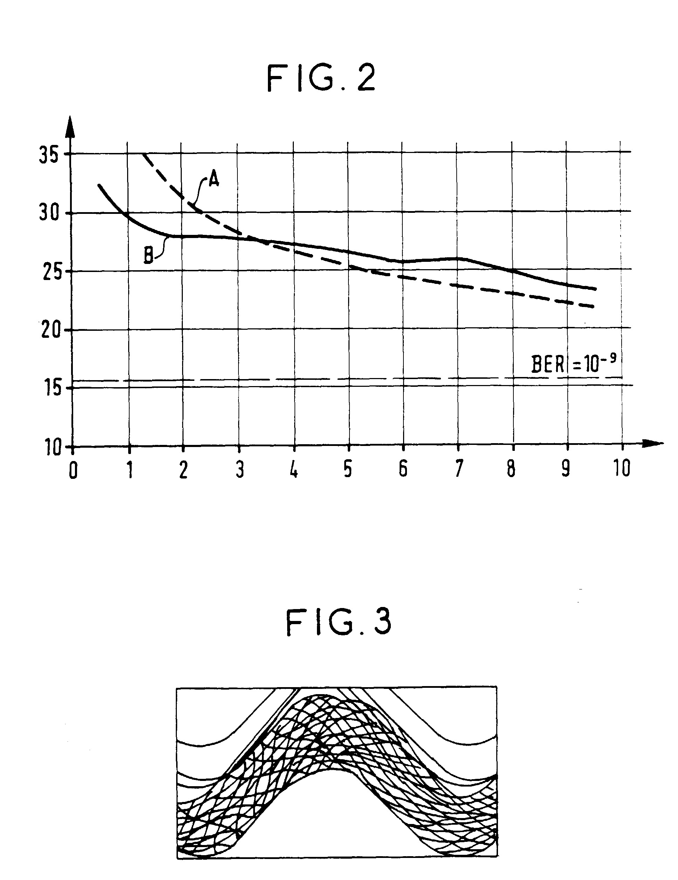

On peut utiliser pour la transmission du signal selon l'invention un des canaux de la bande utile, comme cela apparaît immédiatement à l'homme du métier. En outre, du fait de la robustesse du signal, qui apparaît notamment de la description de la figure 2, et du fait que sa structure est connue, on peut aussi utiliser les extrémités de la bande d'information utile habituellement employée pour les solitons. En effet, des pertes de gain trop importantes pour des signaux d'information classiques restent supportables pour le signal de l'invention. De fait, l'information de phase est plus importante que l'intensité des solitons. On peut donc accepter des performances de gain de transmission moins élevées que pour un signal soliton classique.

L'invention propose non seulement un signal constitué d'une suite ininterrompue de solitons, tel que le signal λₛ représenté à la figure 1D ; il est aussi possible de transmettre un signal inverse, i.e. constitué de solitons noirs, émis à une fréquence d'horloge à transmettre dans le système, et présentant une largeur telle que l'interaction entre les solitons compense les effets limitant la gigue induite par l'effet Gordon-Haus. Un tel signal continu avec des trous impulsionnels formant les solitons noirs présente l'avantage de pouvoir être transmis dans la partie de la fibre optique à dispersion normale. On évite donc de devoir transmettre le signal de l'invention dans la bande utile pour la transmission des solitons, ou aux bornes de cette bande.

La figure 2 montre une représentation graphique du facteur de qualité Q en fonction de la distance z, pour un signal selon l'invention. On a utilisé pour la simulation numérique de la figure 2 un train de solitons émis avec un débit de 10 Gbit/s, soit une période de 100 ps, dans une fibre de dispersion D = 0,55 ps/nm.km. Chaque soliton présente une largeur de 30 ps, soit 0,3 fois la période des solitons. Les solitons sont modulés par une modulation (0-p), ce qui correspond à une interaction répulsive. Des filtres guidants sont disposés sur la fibre à un intervalle Zn = 50 km. On a porté en abscisse la distance de propagation en Mm, et en ordonnées le facteur de qualité, en dB. On a en outre porté en ordonnée le BER (taux d'erreur sur les bits ou "bit error rate") de 10⁻⁹, qui correspond à un facteur de qualité de l'ordre de 15 dB.

La courbe B représente le facteur de qualité en amplitude Qₐ, et la courbe A le facteur de qualité temporel Qₜ, tels que calculés numériquement par l'équation de Schrödinger non-linéaire. Ces deux facteurs présentent une valeur supérieure à 20 dB pour des distances de propagation de 10 Mm, et assurent un BER largement inférieur à 10⁻⁹.

La figure 2 illustre bien la robustesse du signal selon l'invention, et confirme que l'exploitation de l'interaction entre les solitons, à l'encontre des enseignements de l'art antérieur, permet de compenser la gigue induite par l'effet Gordon-Haus.

Est représenté sur la figure 3 l'allure du diagramme de l'oeil dans le cas du signal de la figure 2, pour une distance de propoagation de 10 Mm. L'ouverture de diagramme montre la qualité de la transmission du signal selon l'invention.

Bien entendu, la présente invention n'est pas limitée aux exemples et modes de réalisation décrits et représentés, mais elle est susceptible de nombreuses variantes accessibles à l'homme de l'art. On entend notamment par suite "ininterrompue" de solitons une suite de solitons présentant un nombre de solitons non pas infini, mais suffisant pour limiter les déformations aux limites de la suite. Il est clair que la compensation de la gigue sur un soliton par l'interaction avec les solitons voisins n'est pas aussi efficace en début ou en fin de transmission du signal qu'au milieu de celui-ci. Le nombre de solitons nécessaire peut être déterminé par l'homme du métier pour un système de transmission donné par de simples essais de routine. Il est clair aussi que le débit du signal selon l'invention peut être différent du débit sur les canaux d'information dans la fibre optique, et peut par exemple être un multiple ou un sous multiple de ce débit.

## Revendications

1. Un signal optique constitué d'une série périodique de solitons présentant chacun une largeur temporelle comprise entre 0,20 et 0,33 fois la période du signal.

2. Un signal optique selon la revendication 1, caractérisé en ce que les solitons sont des solitons noirs.

3. Un signal optique selon la revendication 1 ou 2, caractérisé en ce que des solitons voisins sont en phase.

4. Un signal optique selon la revendication 1 ou 2, caractérisé en ce que des solitons voisins sont en opposition de phase.

5. Horloge optique formée d'un signal optique selon l'une des revendications 1 à 4.

6. Procédé de génération d'un signal d'horloge optique dans un système optique de transmission d'information, comprenant l'émission d'une série périodique de solitons présentant chacun une largeur temporelle comprise entre 0,20 et 0,33 fois la période du signal.

7. Procédé selon la revendication 6, caractérisé en ce que les solitons sont des solitons noirs.

8. Procédé selon la revendication 6 ou 7, caractérisé en ce qu'il comprend en outre la modulation (0-p) des solitons émis.

9. Procédé selon la revendication 6 ou 8, caractérisé en ce que les solitons sont émis dans la bande d'information utile du système optique de transmission d'information.

10. Procédé selon la revendication 6 ou 8, caractérisé en ce que les solitons sont émis en dehors de la bande d'information utile du système optique de transmission d'information.

11. Système optique de transmission d'information, comprenant une horloge optique selon la revendication 5 ou une signal selon l'une des revendications 1 à 4.
